# EUROPÄISCHE PATENTSCHRIFT

(11) **EP 1 621 813 B1**
(45) Veröffentlichungstag und Bekanntmachung des Hinweises auf die Patenterteilung: **10.03.2010**
(21) Anmeldenummer: 04017720.6
(22) Anmeldetag: 27.07.2004
(51) Int. Cl.: F23N 5/08, F23M 11/04, F23G 5/50, G02B 23/24

(54) **Beobachtungsvorrichtung mit Freistosseinheit**
Observation apparatus with push-through device
Appareil d'observation avec dispositif pousseur

(43) Veröffentlichungstag der Anmeldung: 01.02.2006
(73) Patentinhaber: Powitec Intelligent Technologies GmbH, 45219 Essen (DE)
(72) Erfinder: Franz Wintrich, 45309 Essen (DE)
(74) Vertreter: Patentanwälte Hosenthien-Held und Dr. Held

(56) Entgegenhaltungen:
- EP-A- 0 716 266
- EP-A- 0 845 636
- WO-A-03/025488
- FR-A- 1 270 647
- US-A- 4 690 634
- US-A- 4 840 474
- PATENT ABSTRACTS OF JAPAN Bd. 0071, Nr. 57 (M-227), 9. Juli 1983 (1983-07-09) & JP 58 064425 A (TOKYO SHIBAURA DENKI KK), 16. April 1983 (1983-04-16)

## Beschreibung

Die Erfindung betrifft eine Beobachtungsvorrichtung mit den Merkmalen des Anspruches 1.

Bei einer bekannten Beobachtungsvorrichtung wird durch Druckluft versucht, das innenliegende Ende von Ablagerungen freizuhalten. Gelingt dies nicht, so muss entweder eine manuelle Reinigung erfolgen, welche ein Abschalten des Ofens erfordert, oder die Regelung des Verbrennungsprozesses muss mit weniger - oder bei Nichtentdecken falschen - Informationen auskommen. Beide Varianten führen zu Zusatzkosten. In der US 4,690,634 A, das dem Oberbegriff von Anspruch 1 zugrunde liegt, wird daher eine Beobachtungsvorrichtung der eingangs genannten Art vorgeschlagen, bei welcher ein Kolben auf der Außenseite der Wand gelagert und mit Druckluft beaufschlagt ist. Dieser Kolben kann einen Schacht in der Wand reinigen, in welchen auch das schräg dazu angeordnete Beobachtung mit seinem innenliegenden Ende mündet. Diese Beobachtungsvorrichtung lässt noch Wünsche offen, beispielsweise bezüglich eines kompakten Aufbaus.

Der vorliegenden Erfindung liegt die Aufgabe zugrunde, eine Beobachtungsvorrichtung der eingangs genannten Art zu verbessern. Diese Aufgabe wird durch eine Beobachtungsvorrichtung mit den Merkmalen des Anspruches 1 gelöst. Weitere vorteilhafte Ausgestaltungen sind Gegenstand der Unteransprüche.

Mit der Freistoßeinheit, welche das Beobachtungselement am innenliegenden Ende frei von an der Wand erfolgten Ablagerungen hält, kann der Blick des Beobachtungselements auf das Innere des Ofens automatisch freigehalten werden, was die Leistung des Ofens erhöht und die Betriebskosten senkt. Die Begriffe Beobachtungsvorrichtung und Beobachtungselement sind nicht auf den optischen Bereich beschränkt. Vielmehr sollen hierunter auch Vorrichtungen und Elemente für andere Meßverfahren verstanden werden, einschließlich Flammenwächter und Widerstandselemente.

Die Freistoßeinheit weist einen Freistoßkopf auf, der in einer Ruhestellung eingefahren zwischen dem innenliegenden Ende und dem außenliegenden Ende angeordnet ist, so dass seine Funktionalität durch das Gehäuse geschützt ist. Bei einer Betätigung der Freistoßeinheit ist der Freistoßkopf mittels eines Antriebs entlang des Gehäuses beweglich, um das Freihalten des Beobachtungselements vorzunehmen. Hierfür ist der Freistoßkopf vorzugsweise wenigstens teilweise über das innenliegende Ende hinaus ausfahrbar, um mechanisch die Ablagerungen zu entfernen.

Für eine kompakte Bauweise mit gleichzeitigem Integrieren der Freistoßeinheit ist als Gehäuse vorzugsweise ein erstes Gehäuse und ein innerhalb des ersten Gehäuses beabstandet angeordnetes zweites Gehäuse vorgesehen, wobei vorzugsweise das Beobachtungselement im zweiten Gehäuse fixiert und der Freistoßkopf zwischen dem ersten Gehäuse und dem zweiten Gehäuse beweglich geführt ist, insbesondere auf dem zweiten Gehäuse gelagert ist. Es kann alternativ oder zusätzlich am ersten Gehäuse gelagert sein. Einfache geometrische Verhältnisse und eine einfache Montagemöglichkeit in der Wand durch eine Bohrung ergeben sich durch eine Rotationssymmetrie, indem vorzugsweise das Beobachtungselement, das erste Gehäuse, das zweite Gehäuse und der Freistoßkopf koaxial zu einer gemeinsamen Achse angeordnet sind. Der Antrieb, der auf keine spezielle Antriebsart beschränkt ist, kann direkt am Freistoßkopf angreifen, vorzugsweise jedoch an Verlängerungsstangen, welche zur Materialeinsparung am Freistoßkopf in Verlängerung desselben angebracht sind.

Das Gehäuse führt vorzugsweise Druckluft zum innenliegenden Ende, um einerseits die Beobachtungsvorrichtung zu spülen und zu kühlen und andererseits die Ablagerungen abzukühlen, damit diese nicht nachgiebig sind, sondern abgebrochen werden können.

Vorzugsweise erfolgt eine regelmäßige Betätigung der Freistoßeinheit und zusätzlich, wenn eine dem Beobachtungselement nachgeschaltete Bildverarbeitung eine Verdunkelung und/oder Eintrübung am innenliegenden Ende feststellt, eine außerordentliche Betätigung der Freistoßeinheit, also jeweils automatisch. Dies schließt manuelle Reinigungen nicht aus. Außerdem können die Informationen über die Betätigung in einen Regelkreis einbezogen werden.

Der Einsatz der erfindungsgemäßen Beobachtungsvorrichtung mit Freistoßeinheit erfolgt vorzugsweise in einem Ofen einer Müllverbrennungsanlage, in welchem besonders starke Ablagerungen von Schlacke an der Wand auftreten, jedoch ist der Einsatzweck hierauf nicht beschränkt.

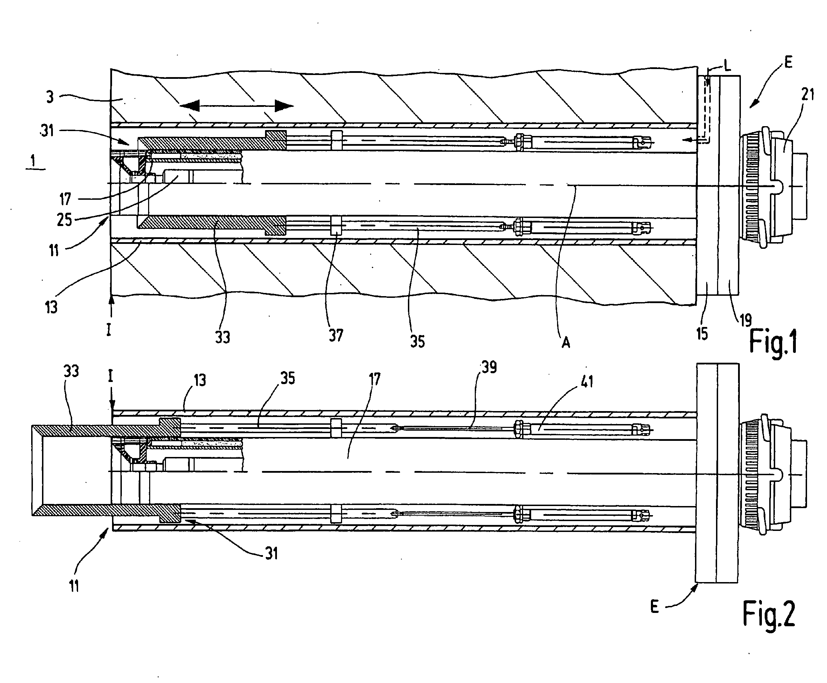

Im folgenden ist die Erfindung anhand eines in der Zeichnung dargestellten Ausführungsbeispiels näher erläutert. Es zeigen
- Fig. 1: eine teilweise geschnitten dargestellte Ansicht des Ausführungsbeispiels mit eingefahrenem Freistoßkopf, wobei die Beweglichkeit durch einen Doppelpfeil angedeutet ist, und
- Fig. 2: eine Darstellung entsprechend Fig. 1 mit ausgefahrenem Freistoßkopf, wobei die Wand des Ofens nicht dargestellt ist.

Ein Ofen 1 einer Sondermüllverbrennungsanlage weist in seiner Wand 3 mehrere Öffnungen auf, welche jeweils eine Beobachtungsvorrichtung 11 aufnehmen. Der Bereich mit dem dem Inneren des Ofens 1 zugewandte Ende der Beobachtungsvorrichtung 11 ist als innenliegendes Ende I, derjenige mit dem vom Inneren des Ofens 1 abgewandten Ende der Beobachtungsvorrichtung 11 als außenliegendes Ende E bezeichnet. Die Beobachtungsvorrichtung 11 weist ein hohles, kreiszylindrisches, erstes Gehäuse 13 auf, welches durch seine Geometrie eine Achse A definiert und fest (und dicht) mit der Wand 3 verbunden ist. Die Achse A verläuft wenigstens näherungsweise senkrecht zur Wand 3 und horizontal. Am außenliegenden Ende E ist an das erste Gehäuse 13 ein radial abstehender erster Flansch 15 angeformt.

Die Beobachtungsvorrichtung 11 weist ferner ein zum ersten Gehäuse 13 koaxial und innerhalb desselben angeordnetes, zylinderförmiges, zweites Gehäuse 17 von geringerem Durchmesser auf, welches in radialem Abstand zur Wandung des ersten Gehäuses 13 angeordnet ist. Das zweites Gehäuse 17 ist hohlwandig ausgebildet. An dem innenliegenden Ende I schließt das zweites Gehäuse 17 bündig mit dem ersten Gehäuse 13 ab, während es an dem außenliegenden Ende E zunächst einen radial abstehenden zweiten Flansch 19 und daran axial anschließend eine Kupplung 21 aufweist. Der zweite Flansch 19 liegt dicht an dem ersten Flansch 15 an und ist beispielsweise durch eine Clipsverbindung der Kupplung 21 an diesem befestigt.

Innerhalb des zweiten Gehäuses 17 weist die Beobachtungsvorrichtung 11 ein zum zweiten Gehäuse 17 koaxiales, im wesentlichen rotationssymmetrisches Beobachtungselement 25 von geringerem Durchmesser auf, vorliegend ein Boroskop. Das Beobachtungselement 25 ist in radialem Abstand zur Wandung des zweiten Gehäuses 17 angeordnet und an beiden Enden des zweiten Gehäuses 17 an diesem durch Halterungsringe oder dergleichen fixiert. Das Beobachtungselement 25 ist direkt oder mittels eines Lichtleiters an eine Kameraanordnung anschließbar, welche im Abstand zur Wand 3 des Ofens 1 angeordnet ist. Je nach Anwendungsfall sind in der Kameraanordnung verschiedene infrarot- und/oder lichtempfindliche Kameras mit hoher Orts-, Zeit- oder Frequenzauflösung oder einfache Dioden angeordnet, für welche das Beobachtungselement 25 den optischen Zugang zum Inneren des Ofens 1 bildet und welche der Bilderfassung des im Ofen 1 stattfindenden Verbrennungsprozesses dienen. Im vorliegenden Zusammenhang soll der Begriff "Optik" Strahlung über den sichtbaren Bereich hinaus betreffen. Zur Spülung, d.h. zur Verhinderung von Verunreinigungen des Beobachtungselements 25, des zweiten Gehäuses 17 und des Inneren des ersten Gehäuses 13, und zum Kühlen dieser Teile der Beobachtungsvorrichtung 11 wird über eine radiale Bohrung im ersten Flansch 15 ständig Druckluft L in die Beobachtungsvorrichtung 11 eingeleitet, welche durch den Zwischenraum zwischen zweitem Gehäuse 17 und erstem Gehäuse 13 und durch die hohle Wandung des zweiten Gehäuses 17 zum innenliegenden Ende I geführt ist. Die Druckdifferenz zum Inneren des Ofens 1 verhindert den Eintritt von Verunreinigungen.

Die Beobachtungsvorrichtung 11 weist zusätzlich eine Freistoßeinheit 31 auf, welche verhindert, daß am innenliegenden Ende I die Beobachtungsvorrichtung 11 aufgrund von Verbackungen durch sich ablagernde Schlacke verstopft wird oder auf andere mechanische Weise den Blick auf das Innere des Ofens 1 verliert. Hierfür umfasst die Freistoßeinheit 31 einen hülsenartigen Freistoßkopf 33, welcher im Zwischenraum zwischen zweitem Gehäuse 17 und erstem Gehäuse 13 angeordnet und parallel zur Achse A auf dem zweitem Gehäuse 17 gleitend (axial) verschieblich ist. Die Freistoßeinheit 31 weist ferner vier Verlängerungsstangen 35 auf, welche in axialer Verlängerung des Freistoßkopfes 33 an der zum außenliegenden Ende E gewandten Stirnseite des Freistoßkopfes 33 angebracht, genauer gesagt eingeschraubt, und in mit dem zweiten Gehäuse 17 verbundenen Haltern 37 geführt sind. Die Verlängerungsstangen 35 sind im Ausführungsbeispiel an Kolbenstangen 39 gekoppelt, welche an ihrem von den Verlängerungsstangen 35 abgewandten, mit Kolben versehenen Ende in Zylindern 41 geführt und pneumatisch beaufschlagbar sind, jedoch sind auch andere Antriebe möglich, beispielsweise ein elektromotorischer oder hydraulischer Antrieb. Gegebenenfalls sind die Antriebe mit Rückstellfedern versehen.

Bei dem Verbrennungsprozeß im Ofen 1 entstehen Schlacken, die sich an der Wand 3 des Ofens 1 ablagern und im weichen Zustand der Schwerkraft folgend nach unten laufen. Dabei kann es vorkommen, daß eine solche Schlackenablagerung von oben her an das innenliegende Ende I der Beobachtungsvorrichtung 11 gelangt. Die Druckluft L beginnt dann, die Schlacke zu kühlen. In der Ruhestellung der Freistoßeinheit 31 ist der Freistoßkopf 33 innerhalb des ersten Gehäuses 13 angeordnet, d.h. beabstandet zum innenliegenden Ende der Beobachtungsvorrichtung 11 angeordnet. Die Freistoßeinheit 31 wird grundsätzlich getaktet betätigt, d.h. regelmäßig angetrieben, beispielsweise alle 10 Sekunden oder jede Minute, wobei dann die beaufschlagten Verlängerungsstangen 35 den Freistoßkopf 33 ausfahren, bis der Freistoßkopf 33 über das innenliegende Ende I übersteht, und dann wieder einfahren, bis der Freistoßkopf 33 die Ruhestellung erreicht hat. Soweit eine Schlackenablagerung in den Ausfahrbereich des Freistoßkopfes 33 gelangt, wird sie mit dieser regelmäßigen Betätigung der Freistoßeinheit 31 mechanisch abgebrochen.

Das über die Beobachtungsvorrichtung 11 durch die Kameraanordnung erfasste Bild des Inneren des Ofens 1 wird von einer Auswertungs- und Regelungselektronik einer Bildverarbeitung unterworfen, welche dann je nach Regelungsziel gegebenenfalls Aktionen zur Regelung des Verbrennungsprozesses im Ofen 1 vornimmt, d.h. die Zufuhren in den Ofen 1 steuert. Wird bei dem erfassten Bild festgestellt, daß sich vom (oberen) Rand her eine Verdunkelung bildet, wird die Freistoßeinheit 31 gezielt angetrieben, d.h. die sich bildende Schlackenablagerung mittels einer außerordentlichen Betätigung der Freistoßeinheit 31 entfernt. Gegebenenfalls wird daraufhin der Takt für die regelmäßige Betätigung der Freistoßeinheit 31 verkürzt. Tritt keine Besserung ein, wird ein Alarm ausgelöst, um eine manuelle Reinigung anzufordern, insbesondere wenn eine mehrmalige außerordentlichen Betätigung der Freistoßeinheit 31 fruchtlos bleibt. Die Informationen über die Häufigkeit der Betätigung der Freistoßeinheit 31 werden vorzugsweise auch für die Regelung des Verbrennungsprozesses verwendet.

### Bezugszeichenliste

- 1: Ofen
- 3: Wand
- 11: Beobachtungsvorrichtung
- 13: erstes Gehäuse
- 15: erster Flansch
- 17: zweites Gehäuse
- 19: zweiter Flansch
- 21: Kupplung
- 25: Beobachtungselement
- 31: Freistoßeinheit
- 33: Freistoßkopf
- 35: Verlängerungsstange
- 37: Halterung
- 39: Kolbenstange
- 41: Zylinder
- A: Achse
- E: außenliegendes Ende
- I: innenliegendes Ende
- L: Druckluft

## Patentansprüche

1. Beobachtungsvorrichtung (11) in der Wand (3) eines Ofens (1), insbesondere für die Bilderfassung eines Verbrennungsprozesses im Ofen (1) mit einem innenliegenden Ende (I), einem außenliegenden Ende (E), wenigstens einem Gehäuse (13, 17), einem innerhalb des Gehäuses (13, 17) angeordneten Beobachtungselement (25), welche sich wenigstens zwischen dem innenliegenden Ende (I) und dem außenliegenden Ende (E) erstrecken, und einer Freistoßeinheit (31) aufweist, welche das Beobachtungselement (25) am innenliegenden Ende (I) frei von an der Wand (3) erfolgten Ablagerungen hält, **dadurch gekennzeichnet, dass** die Freistoßeinheit (31) einen Freistoßkopf (33) aufweist, der in einer Ruhestellung eingefahren zwischen den innenliegenden Ende (I) und dem außenliegenden Ende (E) angeordnet ist und bei einer Betätigung der Freistoßeinheit (31) mittels eines Antriebs entlang des Gehäuses (13, 17) beweglich ist.

2. Beobachtungsvorrichtung nach Anspruch 1, **dadurch gekennzeichnet, dass** der Freistoßkopf (33) bei einer Betätigung der Freistoßeinheit (31) wenigstens teilweise über das innenliegende Ende (I) hinaus ausfahrbar ist.

3. Beobachtungsvorrichtung nach Anspruch 1 oder 2, **dadurch gekennzeichnet, dass** als Gehäuse (13, 17) ein erstes Gehäuse (13) und ein innerhalb des ersten Gehäuses (13) beabstandet angeordnetes zweite Gehäuse (17) vorgesehen ist.

4. Beobachtungsvorrichtung nach Anspruch 3, **dadurch gekennzeichnet, dass** das Beobachtungselement (25) im zweiten Gehäuse (17) fixiert und der Freistoßkopf (33) zwischen dem ersten Gehäuse (13) und dem zweiten Gehäuse (17) beweglich geführt ist.

5. Beobachtungsvorrichtung Anspruch 4, **dadurch gekennzeichnet, dass** das Beobachtungselement (25), das erste Gehäuse (13), das zweite Gehäuse (17) und der Freistoßkopf (33) koaxial zu einer gemeinsamen Achse (A) angeordnet sind.

6. Beobachtungsvorrichtung nach Anspruch 5, **dadurch gekennzeichnet, dass** der Freistoßkopf (33) hülsenartig ausgebildet ist.

7. Beobachtungsvorrichtung nach einem der Ansprüche 1 bis 6, **dadurch gekennzeichnet, dass** am Freistoßkopf (33) Verlängerungsstangen (35) angebracht sind, an denen der Antrieb angreift.

8. Beobachtungsvorrichtung nach einem der Ansprüche 1 bis 7, **dadurch gekennzeichnet, dass** das Gehäuse (13, 17) Druckluft (L) zum innenliegenden Ende (I) führt.

9. Beobachtungsvorrichtung nach einem der Ansprüche 1 bis 8, **dadurch gekennzeichnet, dass** eine regelmäßige Betätigung der Freistoßeinheit (31) und, wenn eine dem Beobachtungselement (25) nachgeschaltete Bildverarbeitung eine Verdunkelung und/oder Eintrübung feststellt, eine außerordentliche Betätigung der Freistoßeinheit (31) erfolgt.

10. Müllverbrennungsanlage insbesondere Sondermüllverbrennungsanlage mit einem Ofen (1), der wenigstens eine Beobachtungsvorrichtung nach einem der Ansprüche 1 bis 9 aufweist.

## Claims

1. Monitoring device (11) in the wall (3) of a furnace (1), particularly for capturing the image of an incineration process in the furnace (1), having an inner end (I), an outer end (E), at least one housing (13, 17), a monitoring element (25) arranged inside the housing (13, 17), extending at least between the inner end (I) and the outer end (E), and a scraper unit (31) that keeps the inner end (I) of the monitoring element (25) free from deposits occurring at the wall (3), **characterized in that** the scraper unit (31) has a scraper head (33) that, in the initial position, is arranged, in a retracted state, between the inner end (I) and the outer end (E), and is conceived to move along the housing (13, 17) by means of a drive in case of an activation of the scraper unit (31).

2. Monitoring device according to Claim 1, **characterized in that** the scraper head (33) is conceived to extend outward, at least partially beyond the inner end (I), in case of an activation of the scraper unit (31).

3. Monitoring device according to Claim 1 or 2, **characterized in that** its housing (13, 17) consist of a first housing (13), inside which a second housing (17) is arranged at a distance.

4. Monitoring device according to Claim 3, **characterized in that** the monitoring element (25) is fixed in the second housing (17) and that the scraper head (33) is guided movably between the first housing (13) and the second housing (17).

5. Monitoring device according to Claim 4, **characterized in that** the monitoring element (25), the first housing (13), the second housing (17) and the scraper head (33) are coaxially arranged around a common axle (A).

6. Monitoring device according to Claim 5, **characterized in that** the scraper head (33) is formed sleeve-like.

7. Monitoring device according to any of Claims 1 to 6, **characterized in that** extension rods (35) are attached to the scraper head (33) which are engaged by the drive.

8. Monitoring device according to any of Claims 1 to 7, **characterized in that** the housing (13, 17) leads compressed air (L) to the inner end (1).

9. Monitoring device according to any of Claims 1 to 8, **characterized in that** regular activation of the scraper unit (31) takes place and that, in such cases when the image processing downstream from the monitoring element (25) detects a darkening and/or clouding at the inner end, an extraordinary activation of the scraper unit (31) takes place.

10. Incineration plant, particularly a hazardous waste incineration plant with a furnace (1), having at least one monitoring device according to any of Claims 1 to 9.

## Revendications

1. Dispositif de surveillance (11) dans la paroi (3) d'un four (1), en particulier pour la saisie d'images d'un processus d'incinération à l'intérieur du four (1), comportant une extrémité intérieure (I), une extrémité extérieure (E), au moins un boîtier (13, 17), un élément de surveillance (25) agencé à l'intérieur du boîtier (13, 17), lesquels s'étendent au moins entre l'extrémité intérieure (I) et l'extrémité extérieure (E), et une unité racleuse (31) qui maintient l'extrémité intérieure (I) de l'élément de surveillance (25) exempte de dépôts se formant sur la paroi (3), **caractérisé par le fait que** l'unité racleuse (31) comporte une tête racleuse (33) qui, dans une position de repos, est agencée rentrée entre l'extrémité intérieure (I) et l'extrémité extérieure (E), et est mobile le long du boîtier (13, 17) lors d'un actionnement de l'unité racleuse (31) au moyen d'une commande.

2. Dispositif de surveillance selon la revendication 1, **caractérisé par le fait que** la tête racleuse (33) est apte à être sortie au moins partiellement de l'extrémité intérieure (I) vers l'extérieur par un actionnement de l'unité racleuse (31).

3. Dispositif de surveillance selon l'une des revendications 1 ou 2, **caractérisé par le fait que**, comme boîtier (13, 17), un premier boîtier (13) et un second boîtier (17) agencé à distance et à l'intérieur du premier boîtier (13) sont prévus.

4. Dispositif de surveillance selon la revendication 3, **caractérisé par le fait que** l'élément de surveillance (25) est fixé dans le second boîtier (17) et la tête racleuse (33) est guidée de manière mobile entre le premier boîtier (13) et le second boîtier (17).

5. Dispositif de surveillance selon la revendication 4, **caractérisé par le fait que** l'élément de surveillance (25), le premier boîtier (13), le second boîtier (17) et la tête racleuse (33) sont agencés coaxialement par rapport à un axe commun (A).

6. Dispositif de surveillance selon la revendication 5, **caractérisé par le fait que** la tête racleuse (33) est configurée à la manière d'une douille.

7. Dispositif de surveillance selon l'une des revendications 1 à 6, **caractérisé par le fait que**, sur la tête racleuse (33), sont fixées des tiges d'extension (35) auxquelles la commande est couplée.

8. Dispositif de surveillance selon l'une des revendications 1 à 7, **caractérisé par le fait que** le boîtier (13, 17) achemine de l'air comprimé (L) jusqu'à l'extrémité intérieure (I).

9. Dispositif de surveillance selon l'une des revendications 1 à 8, **caractérisé par le fait que** l'unité racleuse (31) est actionnée de manière régulière et lorsqu'un traitement d'images en aval de l'élément de surveillance (25) détermine un assombrissement et/ou une opacification, l'unité racleuse (31) est actionnée de manière exceptionnelle.

10. Installation d'incinération de déchets, en particulier installation d'incinération de déchets spéciaux, munie d'un four (1), comportant au moins un dispositif de surveillance selon l'une des revendications 1 à 9.
